# EUROPEAN PATENT APPLICATION

(11) **EP 4 541 635 A1**
(43) Date of publication of application: **23.04.2025**
(21) Application number: 24201705.1
(22) Date of filing: 20.09.2024
(51) Int. Cl.: B60L 3/12, B60L 53/14, B60L 53/16, B60L 53/30, B60L 53/35, B60L 53/37, B60L 53/62, B60L 53/65, B60L 53/66, B60L 53/68, B60L 58/13

(54) **POWER FEED CONTROL APPARATUS, POWER FEEDING SYSTEM, AND POWER FEEDING METHOD**

(30) Priority: 20.10.2023 JP 2023180767
(71) Applicant: TOYOTA JIDOSHA KABUSHIKI KAISHA, Aichi-ken, 471-8571 (JP)
(72) Inventor: SAITO, Yasuhiro, Kariya-shi, 448-8666 (JP); YOKOYAMA, Daiki, Toyota-shi, 471-8571 (JP)
(74) Representative: J A Kemp LLP

(57) **Abstract**

A power feed control apparatus according to this embodiment is a power feed control apparatus configured to perform control for feeding power to a plurality of mobile bodies including different types of power feeding ports (140) using a power feeding robot (600), the power feed control apparatus including: an information acquisition unit (234) configured to acquire type information regarding a type of a power feeding port of a first mobile body; and a control value creation unit (232) configured to create a control value for feeding power to the first mobile body in accordance with the type information.

## Description

### BACKGROUND

The present disclosure relates to a power feed control apparatus, a power feeding system, and a power feeding method.

Patent Literature 1 discloses a charging system that charges an electric automobile. In Patent Literature 1, a power feeding robot charges the electric automobile.

[Patent Literature 1] Japanese Unexamined Patent Application Publication No. 2022-56840

### SUMMARY

In a vehicle manufacturing factory, vehicles to be shipped to various destinations are manufactured. The standard for each power feeding port varies depending on the destination. This causes a problem that, while a vehicle shipped to one destination can be charged with power, another vehicle shipped to another destination cannot be charged with power.

An object of the present disclosure is to provide a power feed control apparatus, a power feeding system, and a power feeding method capable of appropriately feeding power to mobile bodies.

A power feed control apparatus according to the present disclosure is a power feed control apparatus configured to perform control for feeding power to a plurality of mobile bodies including different types of power feeding ports using a power feeding robot, the power feed control apparatus including: an information acquisition unit configured to acquire type information regarding a type of a power feeding port of a first mobile body; and a control value creation unit configured to create a control value for feeding power to the first mobile body in accordance with the type information.

In the power feed control apparatus according to the present disclosure, the control value creation unit may specify a connector in accordance with the type of the power feeding port, and create a control value for enabling the power feeding robot to feed power by inserting the specified specific connector into the power feeding port.

In the power feed control apparatus according to the present disclosure, a control value regarding control for enabling the power feeding robot to select the specific connector from among a plurality of connectors and attach the selected connector to a mobile body may be generated.

In the power feed control apparatus according to the present disclosure, a transmission unit configured to transmit the control value to the power feeding robot may be further included.

A power feeding system according to the present disclosure may include: the aforementioned power feed control apparatus; and the power feeding robot, in which the power feeding robot includes: an arm mechanism configured to hold a connector in accordance with the type of the power feeding port; a reception unit configured to receive a control value transmitted from the transmission unit; and an arm control unit configured to control the arm mechanism so as to insert the connector into the arm mechanism based on the control value.

In the power feed control apparatus according to the present disclosure, the power feed control apparatus may be mounted on the power feeding robot.

In the power feed control apparatus according to the present disclosure, the information acquisition unit may receive the type information from the first mobile body.

In the power feed control apparatus according to the present disclosure, the information acquisition unit may acquire the type information by referring to production management information in which a destination of the first mobile body is registered.

In the power feed control apparatus according to the present disclosure, type information regarding a type of a power feeding port of a second mobile body fed with power after the first mobile body is fed with power may be acquired, and power may be fed by the power feeding robot to the first mobile body while continuing to hold the connector when the type of the first mobile body is the same as the type of the second mobile body.

In the power feed control apparatus according to the present disclosure, the information acquisition unit may acquire power feed information regarding a target SOC in accordance with a destination of the first mobile body, and the first mobile body may be fed with power to meet the target SOC.

In the power feed control apparatus according to the present disclosure, a facility in which the power feed control apparatus is installed may be a manufacturing factory where a mobile body is manufactured or a port from which the mobile body is shipped.

A power feeding method according to the present disclosure is a power feeding method for performing control for feeding power to a plurality of mobile bodies including different types of power feeding ports using a power feeding robot, the power feeding method including: acquiring type information regarding a type of a power feeding port of a first mobile body; and creating a control value for feeding power to the first mobile body in accordance with the type information.

According to the present disclosure, it is possible to provide a power feed control apparatus, a power feeding system, and a power feeding method capable of appropriately feeding power to mobile bodies.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a whole configuration of a power feeding system according to a first embodiment;
Fig. 2 is a block diagram showing a control system of a power feeding system;
Fig. 3 is a flowchart showing processing of an external sensor;
Fig. 4 is a flowchart showing processing for transmitting a control instruction in a server;
Fig. 5 is a flowchart showing processing regarding movement control in a vehicle;
Fig. 6 is a flowchart showing power feeding processing in a server;
Fig. 7 is a flowchart showing processing in a power feeding robot;
Fig. 8 is a flowchart for describing an operation of the power feeding robot;
Fig. 9 is a schematic diagram showing a whole configuration of a power feeding system according to a second embodiment;
Fig. 10 is a block diagram showing a control system of the power feeding system;
Fig. 11 is a schematic diagram showing a whole configuration of a power feeding system according to a third embodiment;
Fig. 12 is a block diagram showing a control system of a power feeding system;
Fig. 13 is a diagram for describing travel control of a vehicle;
Fig. 14 is a control block diagram for describing a travel control example 1;
Fig. 15 is a flowchart for describing the travel control example 1;
Fig. 16 is a control block diagram for describing a travel control example 2; and
Fig. 17 is a flowchart for describing the travel control example 2.

### DESCRIPTION OF EMBODIMENTS

Embodiments of the present disclosure will now be described with reference to the drawings. However, the claimed disclosure is not limited to the following embodiments. Moreover, not all of the configurations described in the embodiments are essential as means for solving the problem. For the sake of clarity, the following descriptions and drawings have been omitted and simplified as appropriate. In each drawing, the same elements have the same reference signs, and repeated descriptions have been omitted as appropriate.

### First Embodiment

### (Power Feeding System)

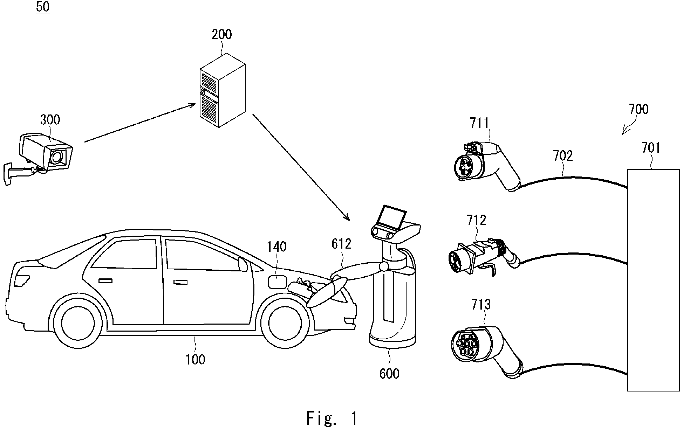

With reference to Fig. 1, a configuration of a power feeding system 50 (this system may also be referred to as a system 50) according to this embodiment will be described. For example, the power feeding system 50 is used in a vehicle manufacturing factory. When a vehicle is manufactured, the power feeding system 50 feeds power to a vehicle 100. The power feeding system 50 includes a server 200, an external sensor 300, a vehicle 100, a power feeding robot 600, and a power feeding device 700.

The vehicle 100 includes a power feeding port 140. The vehicle 100 is, for example, a battery electric vehicle or a plug-in hybrid electric vehicle. The shape and the size of the power feeding port 140 vary depending on the destination to which the vehicle 100 is shipped. For example, the type of a power feeding port 140 of a vehicle 100 for Japan, that of a vehicle 100 for North America, that of a vehicle 100 for Europe, and that of a vehicle 100 for China are different from one another. That is, vehicles 100 shipped to a plurality of destinations are produced in a factory. The vehicle 100 may be an automatic driving car that moves within a vehicle manufacturing factory by automatic control or may be a non-automatic driving car (this may also be referred to as a normal vehicle) driven by a driver. In this example, it is assumed that the vehicle 100 is a self-driving vehicle that can travel by itself.

The target to which power is fed is not limited to the vehicle 100 and may be a mobile body other than a vehicle. In this embodiment, the mobile body is the vehicle 100, and more specifically, an electric automobile (BEV: Battery Electric Vehicle). Note that the mobile body is not limited to an electric automobile and may be, for example, an electric motorcycle, an electric bicycle, an electric kickboard, a hybrid automobile, or a fuel cell automobile. Further, the mobile body may be a vehicle including wheels or a vehicle with an endless track, and may be, for example, a desired vehicle such as a passenger vehicle, a truck, a bus, a two-wheeled vehicle, a four-wheeled vehicle, a tank, or a construction vehicle. Further, the mobile body is not limited to the vehicle 100 and may be an electric vertical take-off and landing aircraft (a so-called flying automobile).

The power feeding device 700 feeds power to the vehicle 100. The vehicle 100 includes a power feeding port 140 with a specification in accordance with its destination. The power feeding device 700 includes a main body 701, codes 702, and connectors 711-713. The types of connectors 711-713 provided vary depending on the specification of the power feeding port 140. The connectors 711-713 have shapes which differ in accordance with the different shapes of the power feeding ports 140. Therefore, the connectors 711-713 have different shapes, sizes and so on. The number of connectors is not limited to three, and may be any number as long as it is two or larger.

For example, a connector 711, which is a Japan-standard CHAdeMO connector, is used for vehicles 100 for Japan, and a connector 712, which is a North American standard-type 1EV connector, is used for vehicles 100 for North America. A connector 713, which is a Europe standard IEC62196-2 Type2 EV connector, is used for vehicles 100 for Europe. That is, the connectors 711-713 have shapes that match the respective power feeding ports 140 connected thereto. Further, the connectors 711-713 may not necessarily conform to the above standards and may instead conform to other standards, such as a Tesla Supercharger EV connector or a Chinese GB/TEV charging connector. As a matter of course, some of the connectors may have the same shape. That is, two or more connectors for one destination may be provided in the power feeding device 700.

The main body 701 generates a power feed voltage for feeding power to the vehicle 100. The power feed voltage that is generated in the main body 701 is supplied to the connectors 711-713 via the codes 702. Note that the plurality of connectors 711-713 conform to the respective types of the power feeding ports 140. Accordingly, the power feeding device 700 supplies a power feed voltage and a power feeding current that conform to the particular standard of each of the power feeding ports 140.

The power feeding robot 600 connects the connectors 711-713 to the power feeding port 140. For example, the power feeding robot 600 includes an arm mechanism 612 for connecting the connectors 711-713 to the power feeding port 140. The arm mechanism 612 includes a plurality of joint motors and an end effector for holding the connectors 711-713. The arm mechanism 612 selects the connector 711 that fits the power feeding port 140 from among the plurality of connectors 711-713, and inserts the selected connector 711 to the power feeding port 140. Accordingly, the power feeding device 700 can supply the power feed voltage to the power feeding port 140. Accordingly, the power feeding device 700 can charge the battery of the vehicle 100.

The external sensor 300 includes various sensors such as an infrastructure camera or LiDAR installed in a facility such as a factory. As a matter of course, two or more external sensors 300 may be installed or two or more types of sensors may be used in combination with each other. The external sensor 300 is a camera that captures an image of the vehicle 100 which is moving or is stopped. The external sensor 300 may be LiDAR. The external sensor 300 transmits a result of the detection to the server 200. The result of the detection transmitted from the external sensor 300 may be a captured image or may be information extracted from the image. When, for example, the external sensor 300 includes an image processing function, the external sensor 300 transmits information extracted by image processing to the server 200.

The server 200, which is an information processing apparatus including a memory or a processor, functions as a power feed control apparatus that controls the power feeding system 50. The server 200 receives, for example, a result of detection in the external sensor 300. The server 200 performs power feed control in accordance with the result of the detection or the like.

The server 200 acquires type information regarding a type of a power feeding port from the external sensor 300 or the vehicle 100. Then, the server 200 creates a control value for feeding power to the vehicle 100 in accordance with the type information. The type information is, for example, information for specifying the connector that corresponds to the power feeding port 140 from among the plurality of connectors 711-713.

The following description will be made based on an assumption that the specific connector specified by the type information is the connector 711. The server 200 creates a control value for performing power feeding using the connector 711 in accordance with the type information, and transmits the created control value to the power feeding robot 600. Then, the power feeding robot 600 opens a lid of the power feeding port 140. The power feeding robot 600 selects the connector 711 in accordance with the type information and grasps the selected connector 711. The power feeding robot 600 inserts the connector 711 into the power feeding port 140. Accordingly, the connector 711 that conforms to the particular standard of each of the power feeding ports 140 can be connected to the power feeding robot 600.

### (Control Block)

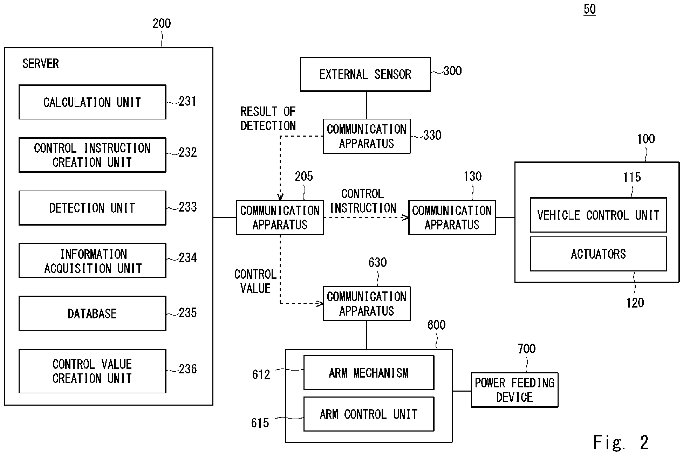

With reference to Fig. 2, control of the power feeding system will be described in detail. Fig. 2 is a block diagram showing a control system of the power feeding system 50.

The server 200 includes a calculation unit 231, a control instruction creation unit 232, a detection unit 233, an information acquisition unit 234, a database 235, and a control value creation unit 236. Further, the server 200 includes a communication apparatus 205 for transmitting and receiving data to and from the vehicle 100, the external sensor 300, the power feeding robot 600, and the like. Note that the server 200 is not limited to a physically single apparatus and a plurality of servers may instead be provided in a distributed manner. For example, the database and so on may be a storage device, a cloud server or the like that is provided separately from the processor.

The external sensor 300 includes a communication apparatus 330 that transmits or receives data to or from the server 200. The communication apparatus 330 transmits an image captured by the external sensor 300 to the server 200. The communication apparatus 330 may transmit, besides the captured image, information obtained from the captured image to the server 200. That is, the communication apparatus 330 transmits the result of the detection detected in the external sensor 300. Note that the communication apparatus 330 may be built in the external sensor 300 or may be separated from the external sensor 300. Further, the communication apparatus 330 may be shared among a plurality of external sensors 300. That is, when the plurality of external sensors 300 are installed, one communication apparatus 330 may transmit data to the server 200.

The calculation unit 231 calculates position information indicating the position and the orientation of the vehicle based on the captured image. For example, the calculation unit 231 may obtain XYZ global coordinates or an orientation in a map of the factory. At least a part of the processing in the calculation unit 231 may be performed in the external sensor 300. For example, the external sensor 300 may include a processor or the like that performs image processing. In this case, position information indicating the position and the like of the vehicle 100 is transmitted from the communication apparatus 330 to the communication apparatus 205.

The position of the vehicle 100 and the orientation of the vehicle 100 may be estimated using the captured image acquired by the external sensor 300 provided in a place other than the place where the vehicle 100 is located. The position of the vehicle 100 can be acquired by calculating coordinates of measurement points of the mobile body in an image coordinate system by using, for example, the outline of the vehicle 100 detected from the captured image, and converting the calculated coordinates into coordinates in a global coordinate system. The orientation of the vehicle 100 can be estimated based on, for example, a direction of a moving vector of the mobile body calculated from changes in positions of feature points of the mobile body between frames of the captured image using an optical flow method. The orientation of the vehicle 100 may be calculated using, for example, a result of output of a yaw rate sensor or the like mounted on the vehicle 100.

The outline of the vehicle 100 included in the captured image can be detected, for example, by inputting the captured image into a detection model that uses artificial intelligence. The detection model may be, for example, a learned machine learning model learned so as to implement one of semantic segmentation or instance segmentation. This machine learning model may be, for example, a convolutional neural network (hereinafter it will be referred to as CNN) learned by supervised learning that uses a learning dataset. The learning dataset includes, for example, a plurality of training images including a mobile body, and a ground-truth label indicating whether each area in the training image is an area indicating the mobile body or an area indicating a part other than the mobile body. At the time of learning of CNN, it is preferable that parameters of CNN be updated in order to reduce the error between the result of the output by the detection model and the ground-truth label by a back propagation method.

The control instruction creation unit 232 creates a control instruction for controlling the vehicle 100. Specifically, the control instruction creation unit 232 creates a control instruction for causing the vehicle 100 to move to the power feeding position. The control instruction may be information indicating a speed, an acceleration, a steering angle or the like of the vehicle 100. Further, when the vehicle 100 can move autonomously, the control instruction may be information indicating a route from the current position to the power feeding position on a map. In this manner, the control instruction creation unit 232 creates a control instruction regarding the movement of the vehicle 100.

The communication apparatus 205 transmits the control instruction to the vehicle 100. When the communication apparatus 130 of the vehicle 100 receives a control instruction, the vehicle 100 moves in accordance with the control instruction. The vehicle 100 includes actuators 120 and a vehicle control unit 115. The actuators 120 include a wheel motor for driving wheels, a steering motor for controlling the steering angle, a brake for stopping the vehicle, and so on. The vehicle control unit 115 generates a control signal to control the actuators 120 in accordance with the control instruction. The vehicle control unit 115 may be composed of an Electronic Control Unit (ECU). Accordingly, the vehicle 100 can move to the power feeding position where the power feeding robot 600 and the power feeding device 700 are located.

The detection unit 233 detects that the vehicle 100 has stopped at the power feeding position. When, for example, the external sensor 300 that captures an image of the power feeding position is provided, the detection unit 233 detects, from an image of the external sensor 300, that the vehicle 100 stops at the power feeding position. Otherwise, the detection unit 233 may transmit a signal indicating that the vehicle 100 has stopped at the power feeding position. Further, the vehicle 100 may transmit vehicle-specific identification information.

The information acquisition unit 234 acquires type information regarding the type of the power feeding port of the vehicle 100. For example, the type information is information regarding the destination of the vehicle 100. The information acquisition unit 234 may acquire type information from the image of the external sensor 300. The information acquisition unit 234 may acquire type information from the identification information of the vehicle 100 that stops at the power feeding position. For example, the information acquisition unit 234 accesses the database 235 for factory production management to acquire production management information. Since the destination is registered for each vehicle in the production management information, the information acquisition unit 234 can read the destination from the identification information or the like of the vehicle 100.

Further, when power feed information regarding target State Of Charge (SOC) or the like at the time of shipment is set, the information acquisition unit 234 reads the power feed information from the database 235. When, for example, the target SOC at the time of shipment is set for each destination, power is fed in such a way that the system 50 meets the target SOC. The set value may be only a lower-limit value or may be a range in which an upper limit value and a lower limit value are set. Further, the power feeding device 700 is not limited to supply power to meet the target SOC, and may instead consume power when the SOC is higher than the target SOC. If the SOC is too high in the process of transportation to a destination, the battery may be deteriorated. On the other hand, if the SOC is small, it may run out of electricity. Therefore, the SOC may be maintained in a predetermined range to be shipped.

The control value creation unit 236 creates a control value based on the type information. For example, the control value is data for specifying the connector in accordance with the destination. When the information on the destination included in the type information is Japan, the control value is data for selecting the connector. Specifically, the control value may be data indicating the number of the connector or may be data indicating the position or the like of the connector.

The communication apparatus 205 transmits the control value to the power feeding robot 600. After the communication apparatus 630 of the power feeding robot 600 receives the control value, the power feeding robot 600 executes a power feeding operation. Specifically, the power feeding robot 600 includes an arm control unit 615. The arm control unit 615 controls the arm mechanism 612 in such a way that the arm mechanism 612 holds the connector 711 specified by the control value. Then, the arm control unit 615 controls the arm mechanism 612 so that the arm mechanism 612 connects the connector 711 to the power feeding port 140.

As described above, the control value creation unit 236 creates a control value in accordance with the type information indicating the type of the power feeding port 140. Accordingly, the power feeding robot 600 is able to feed power to the vehicle 100 using the connector 711 that fits the power feeding port 140.

Note that the communication among the communication apparatus 205, the communication apparatus 330, the communication apparatus 630, and the communication apparatus 130 may be either wireless communication or wired communication. Note that at least some of functions of the blocks provided in the server 200 may be implemented in the vehicle 100, the external sensor 300, the power feeding robot 600, or the power feeding device 700. The communication apparatus 205, the communication apparatus 330, the communication apparatus 630, and the communication apparatus 130 may have only one of the transmission function and the reception function.

### (Power Feeding Operation)

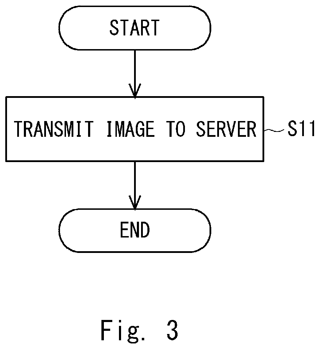

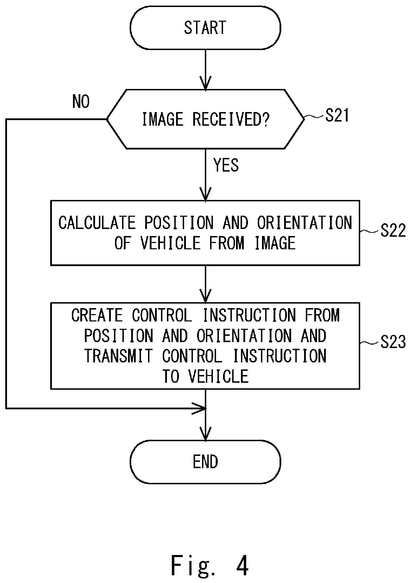

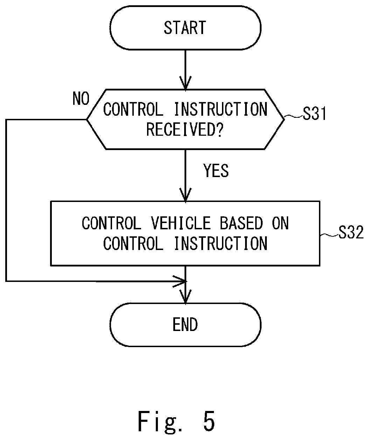

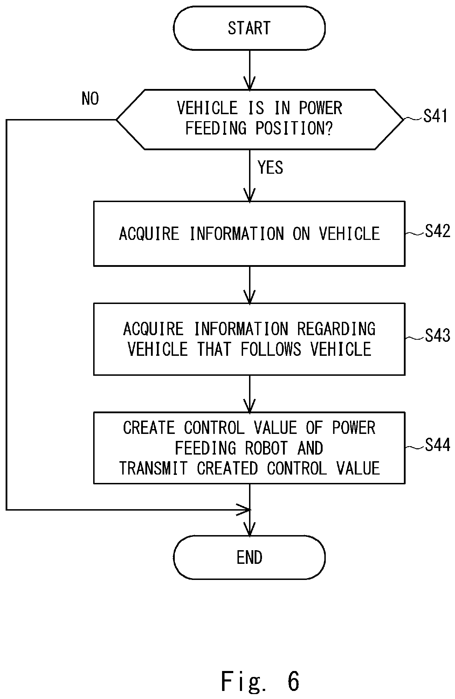

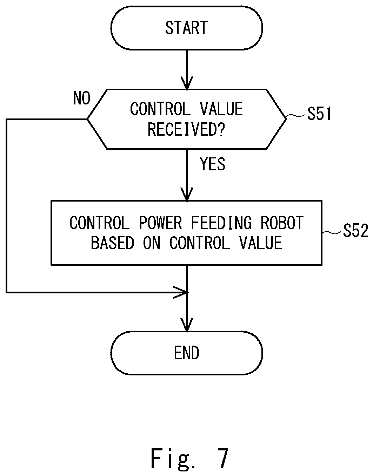

Hereinafter, with reference to Figs. 3 to 7, an operation of the power feeding system 50 will be described. Fig. 3 is a flowchart showing processing of the external sensor 300. Fig. 4 is a flowchart showing processing for transmitting a control instruction in the server 200, and Fig. 5 is a flowchart showing processing regarding a movement control in the vehicle 100. Fig. 6 is a flowchart showing processing for performing power feed control in the server 200. Fig. 7 is a flowchart showing processing in the power feeding robot.

As shown in Fig. 3, after the external sensor 300 captures an image of the vehicle 100, the external sensor 300 transmits this image to the server 200 (S11). As shown in Fig. 4, the server 200 determines whether or not it has received the image (S21). When the server 200 has not received the image (NO in S21), the processing is ended. That is, the server 200 waits until it receives an image from the external sensor 300.

When the server 200 has received the image from the external sensor 300 (YES in S21), the calculation unit 231 calculates the position and the orientation of the vehicle 100 from the image (S22). Then, the control instruction creation unit 232 creates a control instruction from the position and the orientation of the vehicle 100, and the communication apparatus 205 transmits the control instruction to the vehicle 100 (S23).

As shown in Fig. 5, it is determined whether or not the vehicle 100 has received the control instruction from the server 200 (S31). When the vehicle 100 has not received the control instruction (NO in S31), the processing is ended. That is, the vehicle 100 waits until the vehicle 100 receives the control instruction. When the vehicle 100 has received the control instruction (YES in S31), vehicle control is performed based on the control instruction (S32). That is, the vehicle control unit 115 controls the actuators 120 such as a vehicle motor, a steering motor, or a brake. Accordingly, the vehicle 100 moves to the power feeding position.

Next, the detection unit 233 determines whether or not the vehicle 100 is in the power feeding position (S41). For example, the detection unit 233 determines whether or not the vehicle 100 is in the power feeding position based on the image of the external sensor 300 located near the power feeding position. When the vehicle 100 is not in the power feeding position (NO in S41), the processing is ended. That is, the server 200 waits until the vehicle 100 moves to the power feeding position.

When the detection unit 233 determines that the vehicle 100 is in the power feeding position (YES in S41), the information acquisition unit 234 acquires information on the vehicle 100 (S42). After the detection unit 233 detects the vehicle 100 which is in the power feeding position, the information acquisition unit 234 acquires the type information of the vehicle 100. For example, the vehicle 100 which is in the power feeding position may transmit the unique identification information to the server 200. The server 200 refers to the database 235 and specifies the destination from the identification information. Accordingly, the information acquisition unit 234 is able to acquire type information in accordance with the destination. Alternatively, the information acquisition unit 234 may acquire type information from an image or the like of the external sensor 300. Further, the information acquisition unit 234 may acquire power feed information such as SOC.

Further, the server 200 may acquire information regarding a following vehicle that follows the vehicle 100 (S43). The following vehicle is a vehicle to which power is fed after the vehicle 100 is fed with power. For example, from the image of the external sensor 300 or the like, the server 200 may specify the vehicle 100 that arrives at the power feeding position next as the following vehicle. Accordingly, it is possible to prepare power feeding performed on the following vehicle in advance.

Then, the control value creation unit 236 creates a control value of the power feeding robot based on the type information, and the communication apparatus 205 transmits the created control value to the power feeding robot 600 (S44). The control value may be, for example, information indicating the connector 711. Alternatively, the control value may be, for example, a motor drive amount regarding an operation of holding the connector 711 and inserting it into the power feeding port 140. The control value may be, for example, information regarding the position of the power feeding port 140 or the connector 711. Further, the control value may be a value regarding the position where the connector 711 is inserted or the direction in which it is inserted.

The power feeding robot 600 determines whether or not it has received the control value (S51). When the power feeding robot 600 has not received the control value (NO in S51), the processing is ended. That is, the power feeding robot 600 waits until it receives the control value. When the power feeding robot 600 has received the control value (YES in S51), the power feeding robot 600 is controlled based on the control value (S52). For example, the arm control unit 615 drives the arm mechanism 612 in such a way that the arm mechanism 612 grasps the connector 711 that fits the type information.

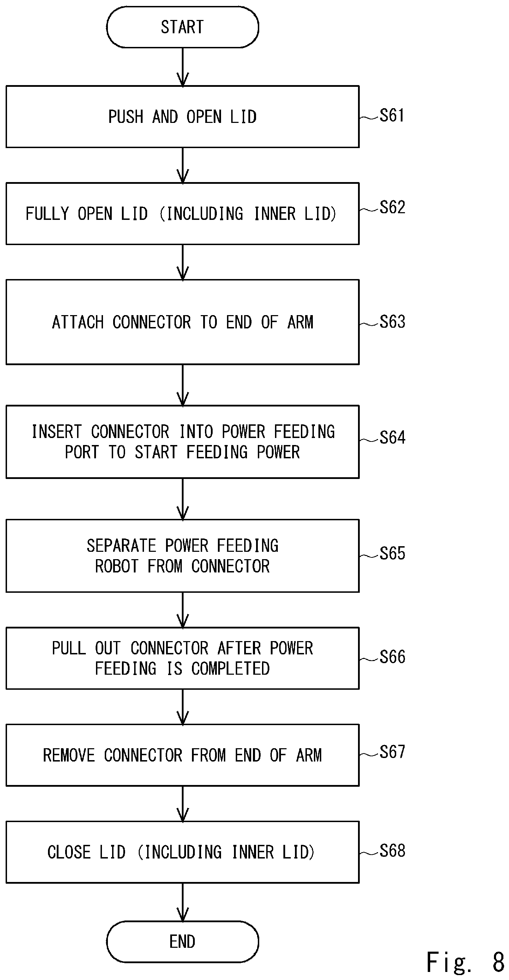

Fig. 8 is a flowchart showing one example of a power feeding operation of the power feeding robot 600. The power feeding robot 600 pushes and opens a lid of the power feeding port 140 (S61). Next, the power feeding robot 600 fully opens the lid, including an inner lid (S62). The power feeding robot 600 attaches the connector 711 that matches the type information to an end of the arm (S63). The power feeding robot 600 inserts the connector into the power feeding port 140 to start feeding power (S64).

The power feeding robot 600 and the connector 711 are separated from each other (S65). That is, while the vehicle 100 is being fed with power, the power feeding robot 600 may release holding of the connector 711 in order to feed power to the following vehicle. For example, while one vehicle is being fed with power, a part of the operation for feeding power to the following vehicle may be performed. Accordingly, it is possible to concurrently feed power to two vehicles. Alternatively, it is possible to prepare, while one vehicle is being fed with power, to feed power to the following vehicle. At this time, the power feeding robot 600 may perform control using the information on the following vehicle acquired in S43. That is, the connector 712 in accordance with the type information of the following vehicle may be inserted into the power feeding port of the following vehicle.

When the type of the following vehicle is the same as that of the vehicle 100 that is currently being fed with power, the power feeding robot and the connector 711 may not be separated from each other. That is, the power feeding robot 600 may feed power while it keeps holding the connector 711. When power is fed continuously to vehicles having power feeding ports 140 of the same type, the power feeding robot 600 does not need to change connectors that it holds. Therefore, the power feeding robot 600 keeps holding the connector 711 without causing the connector 711 to be separated therefrom. Accordingly, after the power feeding of the first vehicle 100 is completed, the connector 711 can be promptly connected to the power feeding port of the following vehicle. In this case, the power feeding robot 600 may be configured to be able to open and close the lid of the power feeding port 140 while holding the connector.

After the power feeding is completed, the power feeding robot 600 pulls out the connector 711 from the power feeding port 140 (S66). Then, the power feeding robot 600 removes the connector 711 from the end of the arm (S67). That is, the power feeding robot 600 returns the connector 711 back to the power feeding device 700. The power feeding robot 600 closes the lid, including the inner lid (S68). Accordingly, power feeding to the vehicle 100 is ended. Then, the vehicle 100 travels by itself from the power feeding position to a place where the subsequent process is performed.

Note that a part of the configuration of the server 200 shown in Fig. 2 may be implemented in the external sensor 300 or the power feeding robot 600. For example, the calculation unit 231 may be provided in the external sensor 300. The control value creation unit 236 may be provided in the power feeding robot 600. Further, the server 200 and the power feeding robot 600 may create the control value in a collaborated manner. For example, the server 200 creates information for specifying the connector or the position of the power feeding port from the type information. Then, the arm control unit 615 may create a control value of a joint motor in such a way that the arm mechanism 612 inserts the connector 711 into the power feeding port 140. In other words, the power feed control apparatus may not be composed of the server 200 alone, and the server 200, the external sensor 300, and the power feeding robot 600 may control power feeding in a collaborated manner.

### Second Embodiment

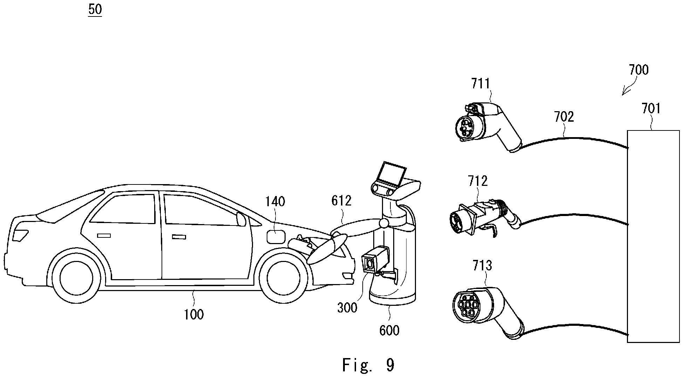

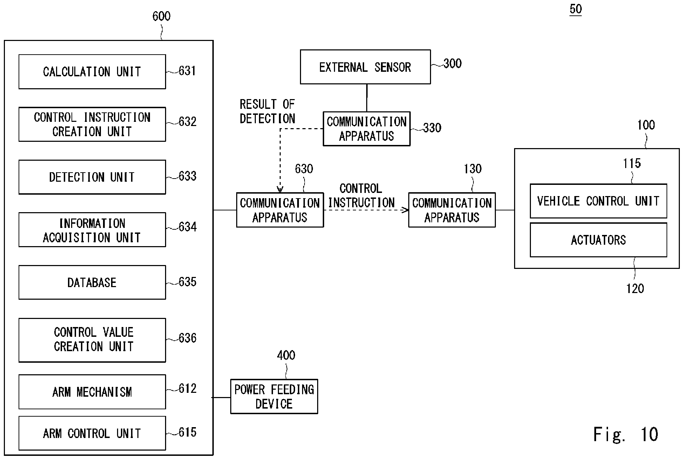

With reference to Figs. 9 and 10, a configuration of an embodiment will be described. Fig. 9 is a schematic diagram showing a whole configuration of a power feeding system. Fig. 10 is a block diagram showing a control system of a power feeding system 50. In this embodiment, the server 200 is not provided. Specifically, a power feeding robot 600 performs processing in the server 200. Therefore, the power feeding robot 600 includes a calculation unit 631, a control instruction creation unit 632, a detection unit 633, an information acquisition unit 634, a database 635, and a control value creation unit 636. Note that the description of the content in the second embodiment similar to that in the first embodiment will be omitted as appropriate.

For example, the power feeding robot 600 is connected to an external sensor 300. After the external sensor 300 captures an image of a vehicle 100, a communication apparatus 330 transmits a result of detection such as an image to the power feeding robot. A communication apparatus 630 of the power feeding robot 600 receives the result of the detection such as the image captured by the external sensor 300. The calculation unit 631 calculates position information indicating the position and the orientation of the vehicle 100.

Then, the control instruction creation unit 632 creates a control instruction for causing the vehicle 100 to move to a power feeding position based on the position information. Then, the communication apparatus 630 transmits the control instruction to the vehicle 100. The communication apparatus 130 of the vehicle 100 receives the control instruction. As the vehicle control unit 115 controls the actuators 120 in accordance with the control instruction, the vehicle 100 moves to the power feeding position.

The detection unit 633 detects that the vehicle 100 is in the power feeding position based on the image. The information acquisition unit 634 acquires type information indicating a type of a power feeding port 140 of the vehicle 100. When, for example, a shape of a bumper is different for each destination of the vehicle 100, the external sensor 300 may capture an image of the bumper. Alternatively, the external sensor 300 may capture an image of the appearance of the power feeding port 140 or an image of the power feeding port 140 in a state in which a lid thereof is opened. Then, the information acquisition unit 634 acquires the type information based on the image. When the power feeding robot 600 has received an identification number of the vehicle 100, the information acquisition unit 634 may acquire the type information by referring to a database 635 for factory production management.

The control value creation unit 636 creates a control value based on the type information. The power feeding robot 600 operates in accordance with the control value. For example, the arm mechanism 612 selects the connector 711 in accordance with the type and holds the selected connector 711. Then, the connector 711 is inserted into the power feeding port 140 of the vehicle 100. Accordingly, the power feeding system 50 is able to feed power to the vehicle using an appropriate connector 711.

### Third Embodiment

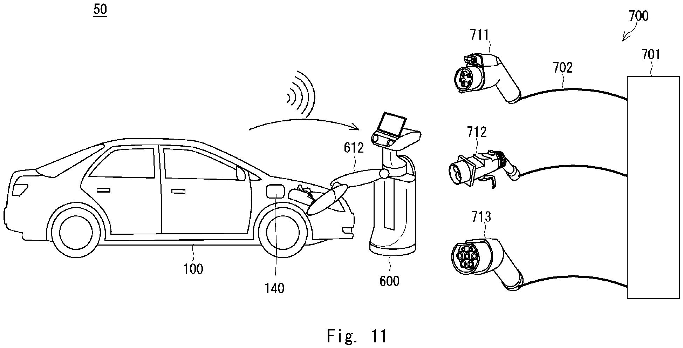

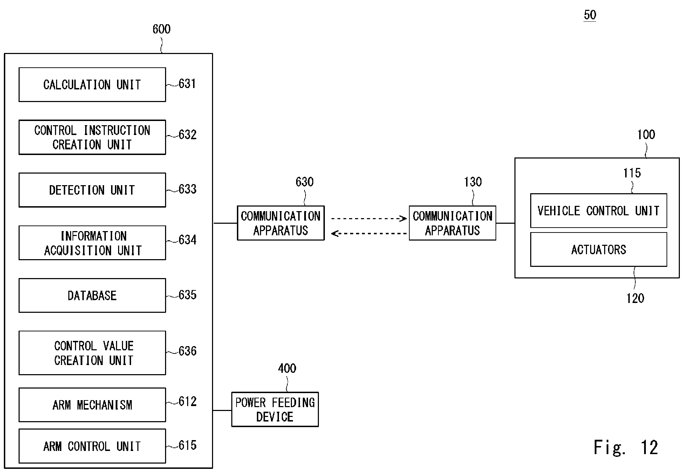

With reference to Figs. 11 and 12, a system according to a third embodiment will be described. Fig. 11 is a schematic diagram showing a configuration of a power feeding system 50. Fig. 12 is a block diagram showing a control system of the power feeding system 50. In this embodiment, a vehicle 100 transmits type information or the like to a power feeding robot 600. Then, like in the second embodiment, a control value creation unit 636 of the power feeding robot 600 creates a control value. With this configuration as well, the power feeding system 50 can feed power to the vehicle 100 using an appropriate connector.

Further, the vehicle 100 may create a control value in accordance with the type information. In this case, the vehicle 100 transmits the control value to the power feeding robot 600. The power feeding robot 600 inserts a connector 711 into a power feeding port 140 using the received control value. Further, while the external sensor 300 is not shown in Figs. 11 and 12, the external sensor 300 may be provided, like in the first and second embodiments.

Note that the power feeding system 50 may be used in a facility such as a vehicle manufacturing factory. The power feeding system 50 may be a facility such as a port for loading vehicles. That is, the power feeding system 50 can be used in a facility where vehicles are charged before shipment. Then, in a facility where the vehicles shipped for a plurality of destinations are fed with power, the power feeding system 50 may appropriately feed power for each vehicle 100.

The vehicle 100 may be a self-driving vehicle that travels by itself to the power feeding position, which corresponds to a target position. Hereinafter, travel control of the vehicle 100 will be described. First, an example in which the vehicle 100 and a server 200 control traveling of the vehicle 100 in a collaborated manner will be described. Further, as described above, the target position of the vehicle 100 may be a power feeding position where the power feeding robot 600 and a power feeding device 700 are located.

### <A. Travel Control Example 1>

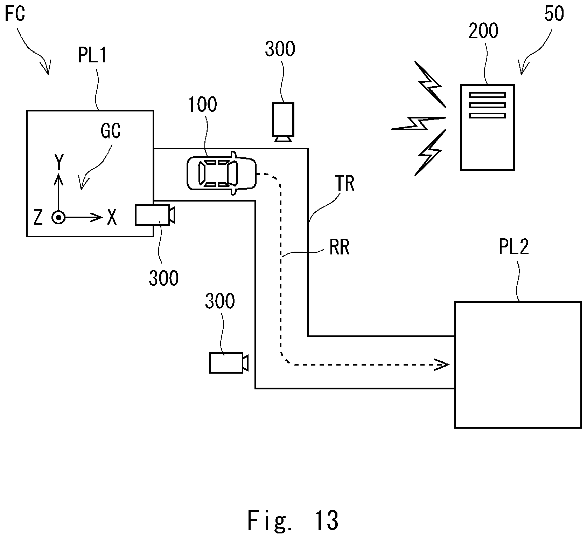

Fig. 13 is a conceptual diagram showing a configuration of a system 50 according to a travel control example 1. The system 50 includes one or more vehicles 100, which correspond to a mobile body, a server 200, and one or more external sensors 300.

Note that, when the mobile body is other than a vehicle, the terms "vehicle" and "car" in the present disclosure can be replaced by a "mobile body" as appropriate, and the term "travel" can be replaced by "move" as appropriate.

The vehicle 100 is configured to be able to travel by unmanned driving. The "unmanned driving" means driving not dependent on a driver's traveling operation. The traveling operation means an operation regarding at least one of "run", "turn", or "stop" of the vehicle 100. The unmanned driving is achieved by automatic or manual remote control that uses an apparatus located in the outside of the vehicle 100, or by autonomous control of the vehicle 100. Any passenger who does not perform the traveling operation may get on the vehicle 100 traveled by unmanned driving. The passenger who does not perform the traveling operation includes, for example, a person who is just sitting on a seat of the vehicle 100, and a person who is performing work such as an operation of assembling, an operation of inspection, or an operation of switches, which is an operation other than the traveling operation, while getting in the vehicle 100. Note that the driving by the traveling operation of the driver may be referred to as "manned driving".

The "remote control" here includes "complete remote control" in which all the operations of the vehicle 100 are completely determined from the outside of the vehicle 100 and "partial remote control" in which a part of the operations of the vehicle 100 is determined from the outside of the vehicle 100. Further, "autonomous control" includes "complete autonomous control" in which the vehicle 100 autonomously controls its own operation without receiving any piece of information from an external apparatus outside the vehicle 100 and "partial autonomous control" in which the vehicle 100 autonomously controls its own operation using information received from the external apparatus outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of external sensors 300 are installed along the traveling path TR in the factory FC. The positions of the respective external sensors 300 in the factory FC are adjusted in advance. The vehicle 100 moves from the first place PL1 to the second place PL2 along the traveling path TR by unmanned driving.

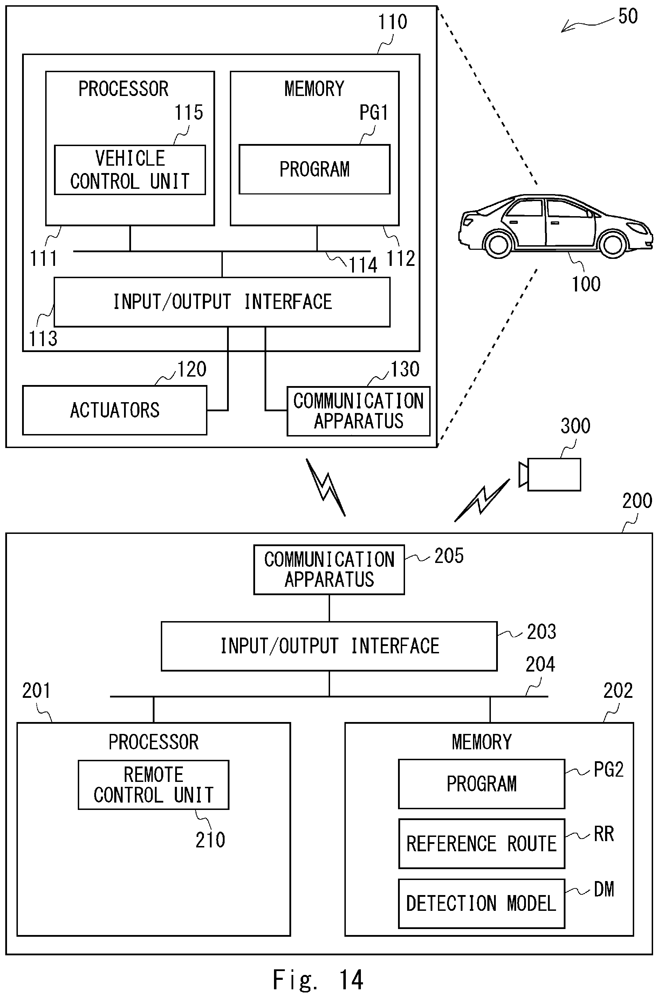

Fig. 14 is a block diagram showing a configuration of the system 50. The vehicle 100 includes a vehicle control apparatus 110 for controlling each part of the vehicle 100, actuators 120 including one or more actuators that drive under a control of the vehicle control apparatus 110, and a communication apparatus 130 for communicating with an external apparatus such as the server 200 by wireless communication. The actuators 120 include an actuator of a drive apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a travel control signal received from the server 200. The travel control signal is a control signal for traveling the vehicle 100. In this embodiment, the travel control signal includes an acceleration and a steering angle of the vehicle 100 as parameters. In another embodiment, the travel control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. A communication apparatus 205 for communicating with various kinds of apparatuses provided outside the server 200 is connected to the input/output interface 203. The communication apparatus 205 can communicate with the vehicle 100 by wireless communication and can communicate with each of the external sensors 300 by wired communication or wireless communication. The processor 201 executes a program PG2 stored in the memory 202, thereby implementing various functions including the function as a remote control unit 210.

The remote control unit 210 acquires a result of detection by the sensors, generates a travel control signal for controlling the actuators 120 of the vehicle 100 using the result of the detection, and transmits the travel control signal to the vehicle 100, thereby causing the vehicle 100 to travel by remote control. The remote control unit 210 may generate not only the travel control signal but also, for example, control signals for controlling actuators for operating various kinds of auxiliary equipment provided in the vehicle 100 or various kinds of equipment such as a windshield wiper, power windows, or lamps. That is, the remote control unit 210 may operate these various kinds of equipment or various kinds of auxiliary equipment by remote control.

The external sensor 300 is a sensor that is provided outside the vehicle 100. The external sensor 300 according to this embodiment is a sensor that captures the vehicle 100 from the outside of the vehicle 100. The external sensor 300 includes a communication apparatus (not shown) and can communicate with other apparatuses such as the server 200 and so on by wired communication or wireless communication.

Specifically, the external sensor 300 is composed of a camera. The camera as the external sensor 300 captures an image including the vehicle 100, and outputs the captured image as a result of detection.

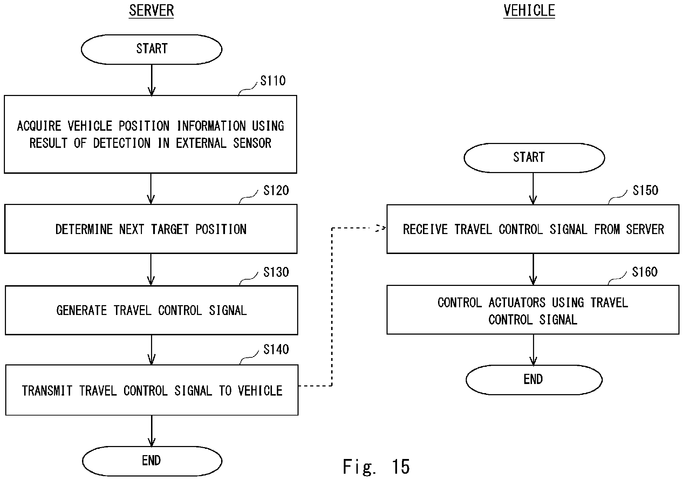

Fig. 15 is a flowchart showing a processing procedure of travel control of the vehicle 100 according to the travel control example. In the processing procedure shown in Fig. 15, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using the result of the detection output from the external sensor 300. The vehicle position information is position information that forms a basis for generating a travel control signal. In this embodiment, the vehicle position information includes the position and the orientation of the vehicle 100 in a global coordinate system GC of the factory FC. Specifically, in Step S110, the processor 201 acquires the vehicle position information using the captured image acquired from the camera, which is the external sensor 300.

Specifically, in Step S 110, the processor 201 detects, for example, the outline of the vehicle 100 from the captured image, calculates the coordinate system of the captured image, that is, coordinates of measurement points of the vehicle 100 in the local coordinate system, and converts the calculated coordinates into coordinates in a global coordinate system GC, thereby acquiring the position of the vehicle 100. The outline of the vehicle 100 included in the captured image can be detected, for example, by inputting the captured image to the detection model DM that uses artificial intelligence. The detection model DM is prepared, for example, in the system 50 or in the outside of the system 50 and is stored in the memory 202 of the server 200 in advance. The detection model DM may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the vehicle 100, and a label indicating whether each area in the training image is an area indicating the vehicle 100 or an area indicating a part other than the vehicle 100. When CNN learning is performed, parameters of the CNN are preferably updated in such a way that the error between the result of the output by the detection model DM and the label is reduced by a back propagation method. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines the target position that the vehicle 100 should go next. In this embodiment, the target position is expressed by coordinates of X, Y, and Z in a global coordinate system GC. The memory 202 of the server 200 stores a reference route RR, which is a route along which the vehicle 100 should travel, in advance. The route is expressed by a node indicating the departure place, nodes indicating passage points, a node that indicates the target position, and a link connecting the respective nodes. The processor 201 determines the target position that the vehicle 100 should go next using the vehicle position information and a reference route RR. The processor 201 determines the target position on the reference route RR which is ahead of the current position of the vehicle 100.

In Step S130, the processor 201 of the server 200 generates a travel control signal for traveling the vehicle 100 toward the determined target position. The processor 201 calculates the traveling speed of the vehicle 100 from the transition of the position of the vehicle 100 and compares the calculated traveling speed with the target speed. In general, when the traveling speed is lower than the target speed, the processor 201 determines the acceleration in such a way that the vehicle 100 accelerates. On the other hand, when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration to prevent the vehicle 100 from being deviated from the reference route RR. On the other hand, when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated travel control signal to the vehicle 100. The processor 201 repeats, in a predetermined cycle, acquisition of the position of the vehicle 100, determination of the target position, generation of the travel control signal, transmission of the travel control signal, and the like.

In Step S150, the processor 111 of the vehicle 100 receives the travel control signal transmitted from the server 200. In Step S 160, the processor 111 of the vehicle 100 controls the actuators 120 using the received travel control signal, thereby causing the vehicle 100 to travel at an acceleration and a steering angle indicated in the travel control signal. The processor 111 repeats reception of the travel control signal, and control of the actuators 120 in a predetermined cycle. With the system 50 in this example, it is possible to cause the vehicle 100 to travel by remote control and to move the vehicle 100 without using transport equipment such as cranes or conveyors.

### <B: Travel Control Example 2>

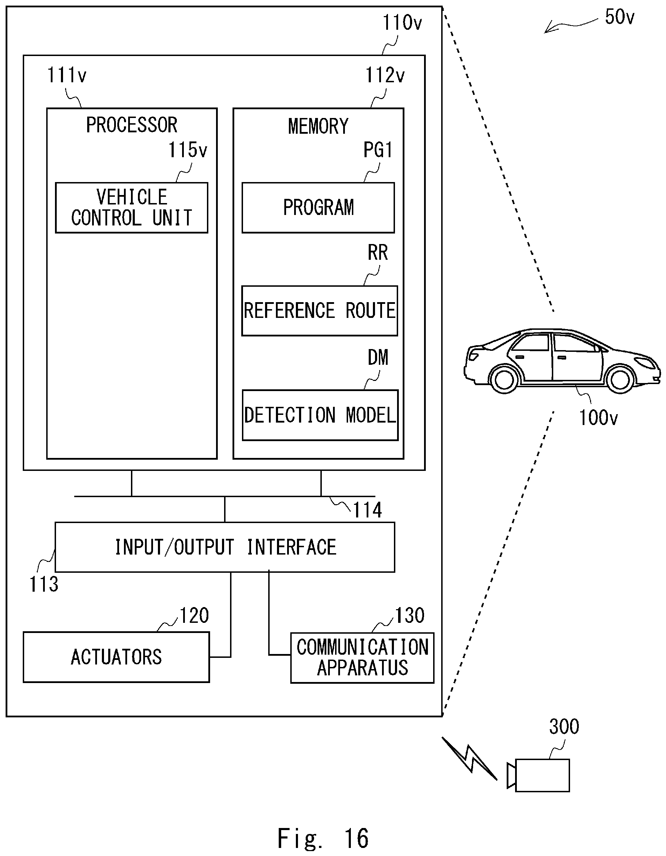

Fig. 16 is an explanatory diagram showing a schematic configuration of a system 50v according to a travel control example 2. In this example, the system 50v is different from that in the travel control example 1 in that the system 50v does not include the server 200. Further, a vehicle 100v in this configuration can travel by autonomous control of the vehicle 100v. The other configurations are the same as those stated above unless otherwise specified.

In this example, a processor 111v of a vehicle control apparatus 110v functions as a vehicle control unit 115v by executing a program PG1 stored in a memory 112v. The vehicle control unit 115v acquires a result of output by a sensor, generates a travel control signal using the result of the output, and outputs the generated travel control signal to operate the actuators 120, thereby enabling the vehicle 100v to travel by autonomous control. In this example, the memory 112v stores, besides the program PG1, a detection model DM and a reference route RR in advance.

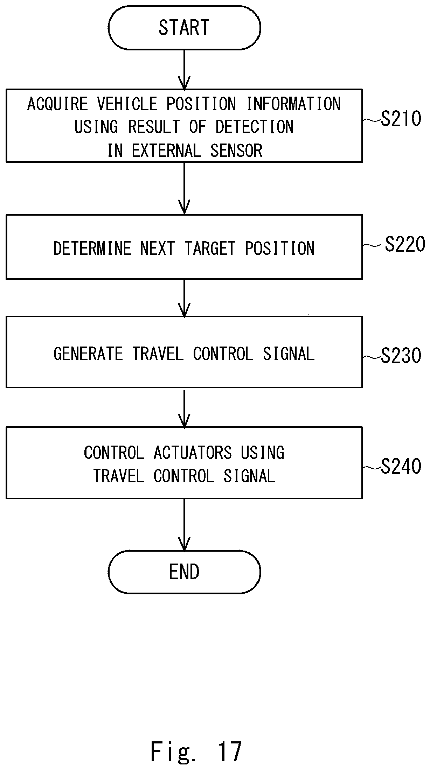

Fig. 17 is a flowchart showing a processing procedure of a travel control of the vehicle 100v in Travel control Example 2. In the processing procedure shown in Fig. 17, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the external sensor 300. In Step S220, the processor 111v determines the target position that the vehicle 100v should go next. In Step S230, the processor 11 1v generates a travel control signal for causing the vehicle 100v to travel toward the determined target position. In Step S240, the processor 111v controls the actuators 120 using the generated travel control signal, thereby causing the vehicle 100v to travel according to a parameter indicated in the travel control signal. The processor 111v repeats acquisition of the vehicle position information, determination of the target position, generation of the travel control signal, and control of the actuators in a predetermined cycle. With the system 50v in this example, it is possible to cause the vehicle 100v to travel by autonomous control of the vehicle 100v without remotely controlling the vehicle 100v by the server 200.

### YY: Other travel control examples

(YY1) In the above examples, the external sensor 300 is a camera. On the other hand, the external sensor 300 may not be a camera, and may instead be, for example, Light Detection And Ranging (LiDAR). In this case, the result of the detection output from the external sensor 300 may be three dimensional point cloud data indicating the vehicle 100. In this case, the server 200 and the vehicle 100 may acquire the vehicle position information by template matching that uses three dimensional point cloud data indicating the result of the detection and reference point cloud data that is prepared in advance.

(YY2) In the travel control example 1, the server 200 executes processing from the acquisition of the vehicle position information to the generation of the travel control signal. On the other hand, the vehicle 100 may perform at least a part of the processing from the acquisition of the vehicle position information to the generation of the travel control signal. For example, the following forms from (1) to (3) may be employed.
(1) The server 200 may acquire vehicle position information, determine the target position that the vehicle 100 should go next, and generate a route from the current position of the vehicle 100 indicated in the acquired vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators 120 using the generated travel control signal.
(2) The server 200 may acquire vehicle position information and transmit the acquired vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators 120 using the generated travel control signal.
(3) In the forms of the above (1) and (2), an internal sensor may be mounted on the vehicle 100, and a result of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the result of the detection in the internal sensor and reflect the result of the detection in the internal sensor in the route when the route is generated. In the form of the above (1), the vehicle 100 may acquire the result of the detection in the internal sensor and reflect the result of the detection in the internal sensor in a travel control signal when the travel control signal is generated. In the form of the above (2), the vehicle 100 may acquire the result of the detection in the internal sensor, and reflect the result of the detection in the internal sensor in the route when the route is generated. In the form of the above (2), the vehicle 100 may acquire the result of the detection in the internal sensor, and reflect the result of the detection in the internal sensor in the travel control signal when the travel control signal is generated.

(YY3) In the travel control example 2, an internal sensor may be mounted on the vehicle 100v and the result of the detection output from the internal sensor may be used in at least one of the generation of the route or the generation of the travel control signal. For example, the vehicle 100v may acquire the result of the detection in the internal sensor, and reflect the result of the detection in the internal sensor in the route when the route is generated. The vehicle 100v may acquire the result of the detection in the internal sensor and reflect the result of the detection in the internal sensor in the travel control signal when the travel control signal is generated.

(YY4) In the travel control example 2, the vehicle 100v acquires the vehicle position information using the result of the detection in the external sensor 300. On the other hand, an internal sensor is mounted on the vehicle 100v, and the vehicle 100v may acquire vehicle position information using a result of detection in the internal sensor, determine the target position that the vehicle 100v should go next, generate a route from the current position of the vehicle 100v indicated in the acquired vehicle position information to the target position, generate a travel control signal for traveling along the generated route, and control the actuators 120 using the generated travel control signal. In this case, the vehicle 100v may travel without using the result of the detection in the external sensor 300. Note that the vehicle 100v may acquire a target arrival time or congestion information from the outside of the vehicle 100v and reflect the target arrival time or the congestion information in at least one of the route or the travel control signal. Further, all the functional configurations of the system 50v may be provided in the vehicle 100v. That is, the processing implemented by the system 50v in the present disclosure may be achieved by the vehicle 100v alone.

(YY5) In the travel control example 1, the server 200 automatically generates a travel control signal to be transmitted to the vehicle 100. On the other hand, the server 200 may generate the travel control signal to be transmitted to the vehicle 100 in accordance with an operation performed by an external operator located in the outside of the vehicle 100. For example, the external operator may operate a manipulation apparatus including a display for displaying a captured image output from the external sensor 300, a steering, an accelerator pedal, and a brake pedal for remotely operating the vehicle 100, and a communication apparatus for communicating with the server 200 by wired communication or wireless communication, and the server 200 may generate a travel control signal in accordance with the operation added to the manipulation apparatus.

(YY6) In each of the above travel control examples, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus 110 and the actuators 120 in order to exert three functions of "run", "turn", and "stop" by unmanned driving. In a case where the vehicle 100 externally acquires information for unmanned driving, the vehicle 100 may further include a communication apparatus 130. That is, the vehicle 100 that can move by unmanned driving may not be provided with at least some of internal components such as a driving seat or a dashboard, at least some of the external components such as a bumper or a fender, or a body shell. In this case, before the vehicle 100 is shipped from the factory FC, the other components such as a body shell may be mounted on the vehicle 100, or the other components such as the body shell may be mounted on the vehicle 100 after the vehicle 100 is shipped from the factory FC in a state in which the other components such as the body shell are not mounted on the vehicle 100. Each of the components may be mounted thereon from a desired direction such as an upper side, a lower side, a front side, a rear side, a right side, or a left side of the vehicle 100, mounted thereon from the same direction, or mounted thereon from different directions. In terms of the form of the platform, the position may be determined as in the vehicle 100 according to the first embodiment.

(YY7) The vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

(YY8) Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

(YY9) In each of the above travel control examples, some or all of the functions and processing implemented in the form of software may be implemented in the form of hardware. Further, some or all of the functions and processing implemented in the form of hardware may be implemented in the form of software. For example, various types of circuits such as an integrated circuit or a discrete circuit may be used as hardware for implementing various types of functions in each of the above embodiments.

A (The) program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A power feed control apparatus configured to perform control for feeding power to a plurality of mobile bodies including different types of power feeding ports (140) using a power feeding robot (600), the power feed control apparatus comprising:
an information acquisition unit (234) configured to acquire type information regarding a type of a power feeding port (140) of a first mobile body; and
a control value creation unit (232) configured to create a control value for feeding power to the first mobile body in accordance with the type information.

2. The power feed control apparatus according to claim 1, wherein
the control value creation unit (232) specifies a connector in accordance with the type of the power feeding port, and
the control value creation unit (232) creates a control value for enabling the power feeding robot to feed power by inserting the specified specific connector into the power feeding port.

3. The power feed control apparatus according to claim 2, wherein a control value regarding control for enabling the power feeding robot (600) to select the specific connector from among a plurality of connectors (711,712, 713) and attach the selected connector to a mobile body is generated.

4. The power feed control apparatus according to any one of claims 1 to 3, further comprising a transmission unit (205) configured to transmit the control value to the power feeding robot.

5. A power feeding system comprising:
the power feed control apparatus according to claim 4; and
the power feeding robot (600), wherein
the power feeding robot (600) comprises:
an arm mechanism (612) configured to hold a connector in accordance with the type of the power feeding port;
a reception unit (630) configured to receive a control value transmitted from the transmission unit (205); and
an arm control unit (612) configured to control the arm mechanism (612) so as to insert the connector into the arm mechanism based on the control value.

6. The power feed control apparatus according to any one of claims 1 to 3, wherein the power feed control apparatus is mounted on the power feeding robot (600).

7. The power feed control apparatus according to any one of claims 1 to 3, wherein the information acquisition unit (234) receives the type information from the first mobile body.

8. The power feed control apparatus according to any one of claims 1 to 3, wherein the information acquisition (234) unit acquires the type information by referring to production management information in which a destination of the first mobile body is registered.

9. The power feed control apparatus according to claim 2 or 3, wherein type information regarding a type of a power feeding port (140) of a second mobile body fed with power after the first mobile body is fed with power is acquired, and
power is fed by the power feeding robot to the first mobile body while continuing to hold the connector when the type of the first mobile body is the same as the type of the second mobile body.

10. The power feed control apparatus according to any one of claims 1 to 3, wherein
the information acquisition unit acquires power feed information regarding a target SOC in accordance with a destination of the first mobile body, and
the first mobile body is fed with power to meet the target SOC.

11. The power feed control apparatus according to any one of claims 1 to 3, wherein a facility in which the power feed control apparatus is installed is a manufacturing factory where a mobile body is manufactured or a port from which the mobile body is shipped.

12. A power feeding method for performing control for feeding power to a plurality of mobile bodies including different types of power feeding ports using a power feeding robot, the power feeding method comprising:
acquiring type information regarding a type of a power feeding port of a first mobile body; and
creating a control value for feeding power to the first mobile body in accordance with the type information.
